# EUROPEAN PATENT SPECIFICATION

(11) **EP 1 252 006 B1**
(45) Date of publication and mention of the grant of the patent: **21.04.2004**
(21) Application number: 01908672.7
(22) Date of filing: 24.01.2001
(51) Int. Cl.: B29C 44/50

(54) **EXTRUDED POLYTETRAFLUOROETHYLENE FOAM**
EXTRUDIERTER POLYTETRAFLUORETHYLENSCHAUM
MOUSSE EN POLYTETRAFLUOROETHYLENE EXTRUDE

(30) Priority: 28.01.2000 DE 10003587
(43) Date of publication of application: 30.10.2002
(73) Proprietor: 3M Innovative Properties Company, St. Paul, MN 55133-3427 (US)
(72) Inventor: KOLMSCHLAG, Gunter, 84503 Altötting (DE); STEURER, Armin, 84529 Tittmoning (DE)
(74) Representative: VOSSIUS & PARTNER
(86) International application number: PCT/US2001/002303
(87) International publication number: WO 2001/054879

(56) References cited:
- EP-A- 0 271 990
- WO-A-96/34400

## Description

The present invention relates to coaxial cables for the high-frequency sector and to the production of polytetrafluoroethylene (PTFE) foam, in particular as cable insulation, a dielectric or a molded gasket.

Cable insulation should have the lowest possible dielectric constant εᵣ and the lowest possible dissipation factor tan δ.

These requirements are particularly well complied with by PTFE, ideally pure PTFE not modified with comonomers or with long unbranched chains, because contamination with end group branching or comonomers adds additional dipoles. The dielectric constant of unsintered PTFE paste material is generally about 1.7 and that of sintered PTFE is generally between 2.05 and 2.1. Another very significant advantage of PTFE cable insulation is that, unlike polyvinyl chloride, polyethylene or polypropylene, it is incombustible.

Cable production generally proceeds by paste extrusion as in "Verarbeitungsbroschüre PTFE, ®Hostaflon Kunststoffe der Hoechst AG [PTFE processing brochure: ®Hostaflon Plastics from Hoechst AG], December 1986". However, this paste is not processed thermoplastically, rather its ability to be deformed is increased through the addition of lubricants. For further improvement in electrical properties, JP-B 42-13560 and US-A-4 187 390 propose that paste extrusion be followed by a stretching process. The oriented tapes have a structure which permits the production of aerated cable sheathing, their density consequently being lower than that of conventional PTFE. There is a corresponding improvement in electrical properties. However, four steps are then required in the process, namely extrudate production, extrudate calendering, tape stretching and winding the tape around a wire. This process is therefore costly and time-consuming.

To reduce the density further, JP-B 57-30059 proposes adding up to 15% of foaming agents. The plastic (PTFE) foamed in that publication is not thermoplastically processible. It is usually only thermoplastically processible materials which are physically or chemically foamed. With an additional foaming procedure, the process is still more complicated.

EP-A-0 271 990 describes an insulated wire comprising a conductor wire having at least one covering layer thereover of ram-extruded polytetrafluoroethylene (PTFE) containing a foaming agent.

EP-A-808 865 teaches that besides thermoplastic processible fluoropolymer, PTFE can also be foamed with super critical CO₂. However, in this process the fluoropolymer is first formed into the desired shape and only subsequently foamed under sinter conditions.

JP-A 11-124458 moreover proposes foams of suspension product. These have to be peeled from a block before they can be wound up as a tape. Again, this is a complicated process.

WO-A-91/12123 provides a simplified process. The PTFE paste is extruded onto wire and then oriented. However, a disadvantage is that the cable insulation does not adhere to the wire, and the insulation becomes deformed due to lack of dimensional stability when exposed to small mechanical loads, for example if it is handled without sufficient care. Although the dimensional stability can be increased by sintering this leads to other disadvantages, such as compromising the electrical properties, shrinkage losses and elasticity losses.

It is an object of the present invention to provide a simple process in which the porous PTFE is processed to give coaxial cables with excellent electrical properties.

According to the invention, this object is achieved by extruding a not-melt processible fluoropolymer, in particular PTFE, together with a solid space holder, in particular a foaming agent, such that voids remain subsequent to the removal of the solid space holder. The solid space holder and in particular the solid foaming agent is used in an amount from 20 to 100 parts by weight of solid space holder or foaming agent for each 100 parts by weight of PTFE.

Since PTFE cannot be processed thermoplastically, it cannot be foamed as a usual thermoplastic polymer (e.g. as disclosed in EP-A-908 487). It is thus surprising that nevertheless, PTFE can be formed into a foam using a foaming agent. However, the . foaming process in case of PTFE is fundamentally different from that of thermoplastic foams. In case of thermoplasts, the foaming agent expands in the melt thereby building pores. In the process of the invention, the foaming agent only fulfills the role of a solid space holder during the extrusion. Upon removal of the foaming agent or space holder, a corresponding void is left at the place where the foaming agent previously resided.

Extrusion according to the invention provides a PTFE foam with a density of not more than 1.3 g/cm³, which insulates an electrical conductor without the inconvenience of winding. The novel process merely comprises dry mixing of PTFE, foaming agent and lubricant. In other respects the processing method is identical with known cable extrusion for paste PTFE.

The foamed PTFE is substantively stress-free, and can therefore retain its dimensions during further thermal processing. The crystallinity is generally preserved and is in general more than 90%.

The foamed PTFE is also flexible and dimensionally stable. As a dielectric, it adheres to the conductor. Foams of this type may also in principle be used as filter screens, filters, membranes or adsorbers. They are also suitable as gaskets, in particular between hard, brittle flanges which have uneven surfaces and would spring apart if assembled under high pressure, for example ceramics flanges or enamels. Gaskets may also be provided as sheets, rings, strips or in any other form.

Suitable solid space holders are compounds that can be removed from an article, in particular by sublimation, evaporation, dissolution, washing out or by decomposing. Preferred are foaming agents that sublime, evaporate or that form volatile degradation products above the extrusion temperature.

Use may be made in particular of the following families of products: azo compounds, such as azodicarbonamide and mixtures with plasticizers or with peroxides, and sulfohydrazides; carbonates, such as sodium carbonate, ammonium carbonate, and hydrogencarbonates, and hartshorn salts; hydrazines, such as trihydrazinotriazine, 4,4'-oxybis(benzenesulfohydrazide), and diphenyl sulfone 3,3'-disulfohydrazide; tetrazoles, such as 5-phenyltetrazole; benzoxazines, such as isatoic anhydride; semicarbazides, such as p-tolylenesulfonylsemicarbazide. Preferably ammonium hydrogen carbonate is used.

PTFE for use in the invention is preferably produced via the emulsion polymerization of TFE. The foaming process can be applied to fluoropolymers that are not melt-processible such as for example TFM®, a fluoropolymer available from Dyneon LLC.

### Production of a dielectric for coaxial cable:

Paste material, such as ®Dyneon TF or TFM grades (TF 2071) is provided with a lubricant and mixed with the foaming agent, which has previously been ground to the desired grain size. This mixture is then rolled and compression molded to give a billet or stick. A ram extruder is used to press the billet through a die, through the center of which a wire runs cocurrently. The PTFE is then dried at a suitable temperature, which depends on the lubricant and foaming agent used. An extrusion example is described.

The thickness of the insulation can be controlled via the take-off speed. The dielectric constant εᵣ is preferably below 1.6 and the dissipation factor tan δ below 2 · 10⁻⁴.

### Other advantageous embodiments:

### Surface-sealed dielectric:

Open-pored PTFE is converted to a PTFE with a sealed-pore surface by brief sintering at the surface. This gives the dielectric in the coaxial cable sufficient protection from soiling, dusts and liquid substances to maintain its quality in the long term. The semifinished product has substantial dimensional stability.

### Increasing the stability of the dielectric:

The dielectric made from PTFE foam can be sintered. This gives slight shrinkage of the diameter of the dielectric. The electrical properties achievable are:
- a dielectric constant εᵣ of 1.7 or below, and
- a dissipation factor tan δ of 2 · 10⁻⁴ or below.

These values are usually obtained with unsintered PTFE materials. The material under consideration here, however, is a sintered foam.

Examples are used below to illustrate the invention.

### Example 1

### Production of a cable:

®Dyneon TF 2071 PTFE paste material is mixed with ammonium hydrogencarbonate from Merck, Darmstadt. The foaming agent is ground in advance to the grain size of 100 to 500 µm, particularly 300 µm. Mixtures are prepared with 100 parts by weight of PTFE and 20, 30 and 40 parts by weight of ammonium hydrogencarbonate. These mixtures are mixed with a typical petroleum spirit for paste processing, ShellSol 100/140. The mixture then stands overnight so that the petroleum spirit distributes uniformly within the PTFE. The PTFE paste, with the foaming agent and the petroleum spirit, is then compression molded to give a stick with 63 mm diameter and 30 cm length, and a ram extruder is used to press this through a die with a diameter of 5 mm. The extrusion speed is 5 m/min.

In the center of the extrusion barrel of the ram extruder there is a mandrel which guides the wire to the die nozzle. The diameter of the electrical conductor is 0.75 mm (AWG 22, 7 strands) and the diameter of the insulation is 5 mm. The extrusion runs with a reduction ratio of 100, with 22 parts by weight of lubricant. The lubricant used comprises the petroleum spirit ShellSol 100/140 usually used for paste extrusion. The PTFE mixture coats the wire at the die, producing a sheathed cable. This product is dried at 160°C. The petroleum spirit escapes and the ammonium hydrogencarbonate breaks down to give low-molecular-weight gaseous substances which escape. The cable insulation securely encloses the electrical conductor. The peel strength of the PTFE insulation on the wire in this cable insulation is 4.0 N at 3 cm, to Siemens standard SN 54 233 of January 1976. Without foaming agent, the pull-off strengths ofunsintered PTFE are about 6.5 N at 3 cm, and those of sintered PTFE cable insulation are about 8 N at 3 cm.

The electrical properties of the unsintered foam are:
- for 20 parts by weight of ammonium hydrogencarbonate:
   εᵣ = 1.53 at 100 MHz,
   εᵣ = 1.55 at 15 kHz,
   tan δ = 1.7 · 10⁻⁴
- for 30 parts by weight of ammonium hydrogencarbonate:
   εᵣ = 1.47 at 100 MHz,
   εᵣ = 1.49 at 15 kHz,
   tan δ = 9 · 10⁻⁵
- for 40 parts by weight of ammonium hydrogencarbonate:
   εᵣ = 1.45 ± 0.01 at 100 MHz,
   εᵣ = 1.45 at 15 kHz,
   tan δ = 2 · 10⁻⁴

The accuracy of measurement of tan δ is of the order of size of the values measured.

The resultant cable can be further processed to give a coaxial cable. For this, a screening is applied to the cable and a protective casing is applied, the cable is cut to the desired length and, if required, provided with plugs.

### Example 2

### Surface-sealed dielectric:

Sample preparation, extrusion and drying proceed in a manner similar to that of Example 1. After drying, the surface is sintered for about 0.5 minutes at 360°C. The surface of the open-pored film is sealed, protecting the dielectric against dirt, dust and liquid substances, so that its quality is maintained in the long term.

This is demonstrated using a test ink. A piece of the dielectric is cut out, dipped into the test ink and excess ink is then rinsed off. It was found that the ink had penetrated the unsintered part of the dielectric and could not be washed off. The ink could be washed off without difficulty from the sintered part of the dielectric. No ink had penetrated into the material, proving that the pores have been sealed.

The sintered cable can be further processed as in Example 1 to give coaxial cable.

### Example 3

### Fully sintered foam:

Sample preparation, extrusion and drying proceed in a manner similar to that of Example 1. After drying, the dielectric is sintered for from 2 to 5 minutes at 360°C (depending on the thickness of the dielectric). This gives a closed-pore foam, protecting the dielectric against dirt, dust and liquid substances, so that its quality is maintained in the long term.

The dielectric has become significantly harder and is particularly suitable for applications in which the cable is exposed to mechanical loads.

The sintered cable can be further processed as in Example 1 to give coaxial cable.

### Example 4

### Production of a molded gasket:

The preparatory extrusion runs in a manner similar to that of Example 1. An extrudate is produced and directly after drying this can be used as a linear gasket, or it may be further processed. For this, the extrudate is calendered until the resultant sheets have a thickness of from 1 to 2 mm and a width of from 5 to 10 cm or above. The gaskets are stamped out from the sheets. These sheets can also be sintered to harden the foamed and formed gasket. The foam remains in nearly unchanged form.

The table below shows the porosities achieved by various proportions of foaming agent. The left-hand column indicates the proportion of foaming agent. The central and right-hand columns show the resultant densities of the PTFE by two different methods of measurement. In the central column the density is determined via the weight and volume of the sheet, and in the right-hand column it is determined by the hydrometer method to DIN 53479. The corresponding values for the cable insulation materials of Example 1 are comparable.

**Table**

| Proportion of foaming agent by weight | Density determination by weight and volume | Density determination by hydrometer method |
|---|---|---|
| 100% PTFE + x% | in g/cm³ | in g/cm³ |
| 0 | 1.592 | 1.526 |
| 5 | 1.483 | 1.420 |
| 10 | 1.450 | 1.360 |
| 20 | 1.299 | 1.300 |
| 30 | 1.219 | 1.183 |
| 40 | 1.019 | 1.102 |
| 60 | 0.965 | 0.958 |
| 100 | 0.618 | 0.678 |

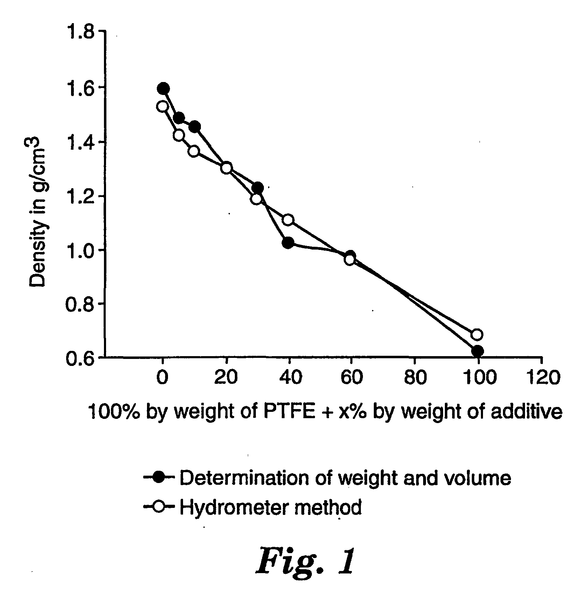

Fig. 1 illustrates the table and shows that the two methods of measurement give equally clear results.

### Example 5

### Filter screens, filters, membranes

When Example 1 and Example 4 are used to produce a sheet, this can also be used as a semipermeable material, allowing removal of solids from gases, for example.

### Example 6

Suitable selection of a foaming agent in Example 1 and processing as in Example 4 permits controlled introduction of catalysts into the membrane material, so that these can purify or absorb gases separated off as in Example 5.

## Claims

1. A process for producing articles of non-melt processible fluoropolymers, in particular polytetrafluoroethylene, with a density of not more than 1.3 g/cm³ which comprises extruding non-melt processible fluoropolymer comprising a solid space holder, in particular a foaming agent, and removing the solid space holder.

2. The process as claimed in claim 1, wherein the solid space holder is removed subsequent to the extrusion of the fluoropolymer, in particular wherein a polytetrafluoroethylene mixture comprising foaming agent is foamed after extrusion.

3. The process as claimed in claim 1 or 2, wherein the material is foamed at a temperature above the extrusion temperature.

4. The process as claimed in claim 1, wherein said articles are electrical cables, in particular coaxial cables, the process comprising extruding electrical conductors with polytetrafluoroethylene comprising solid space holder, in particular a foaming agent, and removing the solid space holder.

5. The process as claimed in claim 1, wherein the solid space holder is removed by sublimation, evaporation, dissolution, washing out or decomposing.

6. The process as claimed in one or more of claims 1 to 5, wherein the solid space holder is selected from azo compounds and mixtures with plasticizers or with peroxides, and sulfohydrazides; carbonates, hydrazines, tetrazoles, benzoxazines and semicarbazides.

7. The process as claimed in one or more of claims 1 to 5, wherein the solid space holder is selected from azodicarbonamide and mixtures with plasticizers or with peroxides, and sulfohydrazides; sodium carbonate, ammonium carbonate, and hydrogencarbonates, and hartshorn salts; trihydrazinotriazine, 4,4'-oxybis(benzenesulfohydrazide), and diphenyl sulfone 3,3'-disulfohydrazide; 5-phenyltetrazole; isatoic anhydride; and p-toluylenesulfonylsemicarbazide.

8. The process as claimed in one or more of claims 1 to 5, wherein the solid space holder is ammonium hydrogen carbonate.

9. The process as claimed in one or more of claims 1 to 8, wherein the foam of not-melt processible fluoropolymer, in particular the polytetrafluoroethylene foam, is sintered.

10. An electrical cable, comprising an extruded polytetrafluoroethylene foam obtainable by a process according to one or more of claims 4 to 9.

11. An electrical cable as claimed in claim 10 whose insulation is composed of polytetrafluoroethylene foam, wherein the surface of the foam has been sintered.

12. An electrical cable as claimed in claim 10 or 11 with a dissipation factor tan δ of not more than 2 · 10⁻⁴ or a dielectric constant εᵣ below 1.7.

13. Foaming agent containing mixture of not-melt processible fluoropolymer, in particular polytetrafluoroethylene, **characterized in that** the mixture contains 100 parts by weight of fluoropolymer and 20 to 100 parts by weight of solid foaming agent.

14. Use of an article obtainable by a process according to one or more of claims 1 to 3 as a gasket, filter screen, filter adsorber or membrane.

## Patentansprüche

1. Verfahren zur Herstellung von Gegenständen aus nicht schmelzverarbeitbaren Fluorpolymeren, insbesondere Polytetrafluorethylen, mit einer Dichte von nicht mehr als 1,3 g/cm³, wobei das Verfahren Extrudieren des nicht schmelzverarbeitbaren Fluorpolymers, das einen festen Platzhalter, insbesondere ein Schaumbildner enthält, und Entfernen des festen Platzhalters umfasst.

2. Verfahren nach Anspruch 1, wobei der feste Platzhalter nach dem Extrudieren des Fluorpolymers entfernt wird, insbesondere wobei ein Schaumbildner umfassendes Polytetrafluorethylengemisch nach dem Extrudieren geschäumt wird.

3. Verfahren nach Anspruch 1 oder 2, wobei das Material bei einer Temperatur oberhalb der Extrusionstemperatur geschäumt wird.

4. Verfahren nach Anspruch 1, wobei es sich bei den Gegenständen um elektrische Kabel, insbesondere Koaxialkabel handelt, und wobei das Verfahren Extrudieren von elektrischen Leitern mit einem festen Platzhalter, insbesondere ein Schaumbildner, umfassenden Polytetrafluorethylen und Entfernen des festen Platzhalters umfasst.

5. Verfahren nach Anspruch 1, wobei der feste Platzhalter durch Sublimieren, Verdampfen, Lösen, Auswaschen oder Zersetzung entfernt wird.

6. Verfahren nach einem oder mehreren der Ansprüche 1 bis 5, wobei der feste Platzhalter aus Azoverbindungen und Gemischen mit Weichmachern oder mit Peroxiden, sowie Sulfohydraziden; Carbonaten, Hydrazinen, Tetrazolen, Benzoxazinen und Semicarbaziden gewählt wird.

7. Verfahren nach einem oder mehreren der Ansprüche 1 bis 5, wobei der feste Platzhalter aus Azodicarbonamid und Gemischen mit Weichmachern oder mit Peroxiden, sowie Sulfohydraziden; Natriumcarbonat, Ammoniumcarbonat, und Hydrogencarbonaten sowie Hirschhornsalzen; Trihydrazinotriazin, 4,4'-Oxybis(benzolsulfohydrazid), und Diphenylsulfon-3,3'-disulfohydrazid; 5-Phenyltetrazol; Isatosäureanhydrid; und p-Toluylensulfonylsemicarbazid gewählt wird.

8. Verfahren nach einem oder mehreren der Ansprüche 1 bis 5, wobei es sich bei dem festen Platzhalter um Ammoniumhydrogencarbonat handelt.

9. Verfahren nach einem oder mehreren der Ansprüche 1 bis 8, wobei der Schaum aus nicht schmelzverarbeitbarem Fluorpolymer, insbesondere der Polytetrafluorethylenschaum, gesintert wird.

10. Elektrisches Kabel umfassend einen extrudierten Polytetrafluorethylenschaum, erhältlich durch ein Verfahren nach einem oder mehreren der Ansprüche 4 bis 9.

11. Elektrisches Kabel nach Anspruch 10, dessen Isolierung aus Polytetrafluorethylenschaum aufgebaut ist, wobei die Oberfläche des Schaums gesintert wurde.

12. Elektrisches Kabel nach Anspruch 10 oder 11 mit einem Verlustfaktor tan δ von maximal 2·10⁻⁴ oder einer Dielektrizitätskonstante εᵣ kleiner als 1,7.

13. Schaummittelhaltiges Gemisch von nicht schmelzverarbeitbarem Fluorpolymer, insbesondere Polytetrafluorethylen, **dadurch gekennzeichnet, daß** das Gemisch 100 Gewichtsteile Fluorpolymer und 20 bis 100 Gewichtsteile festen Schaumbildner enthält.

14. Verwendung eines durch ein Verfahren nach einem oder mehreren der Ansprüche 1 bis 3 erhältlichen Gegenstandes als Dichtung, Filtersieb, Filteradsorber oder Membran.

## Revendications

1. Procédé de production d'articles en fluoropolymères non transformables par fusion, en particulier le polytétrafluoroéthylène, ayant une densité ne dépassant pas 1,3 g/cm³, qui comprend l'extrusion du fluoropolymère non transformable par fusion contenant un conservateur de pores solide, en particulier un agent moussant, et l'élimination du conservateur de pores solide.

2. Procédé selon la revendication 1, dans lequel le conservateur de pores solide est éliminé après l'extrusion du fluoropolymère, en particulier dans lequel un mélange de polytétrafluoroéthylène contenant un agent moussant est transformé en mousse après l'extrusion.

3. Procédé selon la revendication 1 ou 2, dans lequel le matériau est transformé en mousse à une température supérieure à la température d'extrusion.

4. Procédé selon la revendication 1, dans lequel lesdits articles sont des câbles électriques, en particulier des câbles coaxiaux, le procédé comprenant l'extrusion de conducteurs électriques comprenant du polytétrafluoroéthylène contenant un conservateur de pores solide, en particulier un agent moussant, et l'élimination du conservateur de pores solide.

5. Procédé selon la revendication 1, dans lequel le conservateur de pores solide est éliminé par sublimation, par évaporation, par dissolution, par lavage ou par décomposition.

6. Procédé selon l'une ou plusieurs des revendications 1 à 5, dans lequel le conservateur de pores solide est sélectionné parmi les composés azoïques et leurs mélanges avec des plastifiants ou avec des peroxydes, et les sulfohydrazides ; les carbonates, les hydrazines, les tétrazoles, les benzoxazines et les semi-carbazides.

7. Procédé selon l'une ou plusieurs des revendications 1 à 5, dans lequel le conservateur de pores solide est sélectionné parmi l'azodicarbonamide et ses mélanges avec des plastifiants ou avec des peroxydes, et les sulfohydrazides ; le carbonate de sodium, le carbonate d'ammonium, les hydrogénocarbonates d'ammonium, et les sesquicarbonates d'ammonium ; la trihydrazinotriazine, le 4,4'-oxybis(benzènesulfohydrazide), et le diphénylsulfone 3,3'-disulfohydrazide ; le 5-phényltétrazole ; l'anhydride isatoïque ; et le p-toluylènesulfonylsemi-carbazide.

8. Procédé selon l'une ou plusieurs des revendications 1 à 5, dans lequel le conservateur de pores solide est l'hydrogénocarbonate d'ammonium.

9. Procédé selon l'une ou plusieurs des revendications 1 à 8, dans lequel la mousse de fluoropolymère non transformable par fusion, en particulier la mousse de polytétrafluoroéthylène, est frittée.

10. Câble électrique, comprenant une mousse de polytétrafluoroéthylène extrudée que l'on peut obtenir par mise en oeuvre d'un procédé selon l'une ou plusieurs des revendications 4 à 9.

11. Câble électrique selon la revendication 10, dont l'isolation est constituée de mousse de polytétrafluoroéthylène, dans lequel la surface de la mousse a été frittée.

12. Câble électrique selon la revendication 10 ou 11, ayant un facteur de dissipation tan δ ne dépassant pas 2·10⁻⁴ ou une constante diélectrique εᵣ inférieure à 1,7.

13. Mélange de fluoropolymère non transformable par fusion contenant un agent moussant, en particulier le polytétrafluoroéthylène, **caractérisé en ce que** le mélange contient une proportion pondérale de 100 parties de fluoropolymère et une proportion pondérale de 20 à 100 parties d'agent moussant solide.

14. Utilisation d'un article que l'on peut obtenir par mise en oeuvre d'un procédé selon l'une ou plusieurs des revendications 1 à 3, comme joint d'étanchéité, comme écran filtre, comme adsorbeur de filtrage ou comme membrane.
